(19)

Europäisches
Patentamt
European
Patent Office
Office européen
des brevets

(11) **EP 2 874 390 A1**

(12) **EUROPEAN PATENT APPLICATION**
published in accordance with Art. 153(4) EPC

| | |
|---|---|
| (43) Date of publication:<br>**20.05.2015 Bulletin 2015/21** | (51) Int Cl.:<br>**H04N 7/00** $^{(2011.01)}$ |
| (21) Application number: **13816796.0** | (86) International application number:<br>**PCT/KR2013/006099** |
| (22) Date of filing: **09.07.2013** | (87) International publication number:<br>**WO 2014/010918 (16.01.2014 Gazette 2014/03)** |

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.07.2012 US 201261670121 P**

(71) Applicant: LG Electronics Inc.
**Seoul 150-721 (KR)**

(72) Inventors:
• **KOO, Moonmo**
  **Seoul 137-724 (KR)**
• **JUNG, Jiwook**
  **Seoul 137-724 (KR)**

• **YEA, Sehoon**
  **Seoul 137-724 (KR)**
• **HEO, Jin**
  **Seoul 137-724 (KR)**
• **KIM, Taesup**
  **Seoul 137-724 (KR)**
• **SUNG, Jaewon**
  **Seoul 137-724 (KR)**
• **SON, Eunyong**
  **Seoul 137-724 (KR)**

(74) Representative: **Frenkel, Matthias Alexander**
  **Wuesthoff & Wuesthoff
  Patentanwälte PartG mbB
  Schweigerstrasse 2
  81541 München (DE)**

(54) **METHOD AND DEVICE FOR PROCESSING VIDEO SIGNAL**

(57)    A method for processing a video signal, according to the present invention, performs inter-view inter prediction for a current texture block by searching for a block coded to a reference view motion vector for neighboring blocks of the current texture block, storing a reference inter-view motion vector corresponding to the retrieved reference view motion vector of a spatial neighboring block in a candidate list, inducing an inter-view motion vector of the current texture block by using any one of the reference inter-view motion vectors stored in the candidate list, and using the induced inter-view motion vector. The present invention can improve coding efficiency by enabling a more accurate prediction of an inter-view motion vector among various inter-view motion vector candidates to thereby reduce the amount of residual data to be transmitted.

FIG. 6

EP 2 874 390 A1

**Description**

[Technical Field]

The present invention relates to a method and device for processing a video signal.

[Background Art]

Compression refers to a signal processing technique for transmitting digital information through a communication line or storing the digital information in a form suitable for a storage medium. Subjects of compression include audio, video and text information. Particularly, a technique of compressing images is called video compression. Multiview video has characteristics of spatial redundancy, temporal redundancy and inter-view redundancy.

[Disclosure]

[Technical Problem]

An object of the present invention is to improve video signal coding efficiency.

[Technical Solution]

The present invention derives an inter-view motion vector of the current texture block on the basis of at least one of an inter-view motion vector of a spatial/temporal neighboring block and a reference inter-view motion vector.
The present invention derives the inter-view motion vector in consideration of priorities of candidates including at least one of the spatial/temporal neighboring block and the reference inter-view motion vector.
The present invention searches neighboring blocks for a block coded using a reference view motion vector and stores a reference inter-view motion vector corresponding to the reference view motion vector of the searched neighboring block in a candidate list. The present invention derives the inter-view motion vector of the current texture block using the reference inter-view motion vector stored in the candidate list.

[Advantageous Effects]

The present invention can improve video data prediction accuracy using correlation between views by performing inter-view inter-prediction using an inter-view motion vector.
In addition, a correct inter-view motion vector can be derived by selectively using one of a spatial neighboring block, a temporal neighboring block and a reference inter-view motion vector so as to improve inter-view inter-prediction accuracy, and coding efficiency can be enhanced by reducing the amount of transmitted residual data.
Furthermore, a reference inter-view motion vector corresponding to a reference view motion vector is used as a candidate even in the case of a block coded according to temporal inter-prediction as well as a block coded according to inter-view inter-prediction from among spatial/temporal neighboring blocks, thereby predicting an accurate inter-view motion vector.
Moreover, a block coded according to inter-view inter-prediction of spatial/temporal neighboring blocks is searched and an inter-view motion vector is derived using a reference inter-view motion vector when the block is not present such that other neighboring blocks are not searched for blocks coded according to inter-view inter-prediction, thereby improving coding rate.

[Description of Drawings]

FIG. 1 is a block diagram of a video decoder according to an embodiment to which the present invention is applied.
FIG. 2 illustrates a configuration of a motion vector list generator according to an embodiment to which the present invention is applied.
FIG. 3 is a view illustrating a method for inter-predicting a multi-view texture image according to an embodiment to which the present invention is applied.
FIG. 4 is a view illustrating an inter-view motion vector and a reference view motion vector according to an embodiment to which the present invention is applied.
FIG. 5 is a flowchart illustrating a method for deriving a disparity vector of a current texture block using depth data according to an embodiment to which the present invention is applied.

FIG. 6 is a flowchart illustrating a method for deriving an inter-view motion vector according to an embodiment to which the present invention is applied.

FIG. 7 is a view illustrating a spatial neighboring block according to an embodiment to which the present invention is applied.

FIG. 8 is a view illustrating a temporal neighboring block according to an embodiment to which the present invention is applied.

FIG. 9 is a flowchart illustrating a method of using reference inter-view motion vector information according to an embodiment to which the present invention is applied.

FIG. 10 is a flowchart illustrating a method for deriving an inter-view motion vector on the basis of a prediction mode according to an embodiment to which the present invention is applied.

[Best Mode]

According to one aspect of the present invention, there is provided a method for processing a video signal, including: searching spatial neighboring blocks of a current texture block for a block coded using a reference view motion vector; storing, in a candidate list, a reference inter-view motion vector corresponding to a reference view motion vector of the searched spatial neighboring block; searching temporal neighboring blocks of the current texture block for a block coded using a reference view motion vector; storing, in the candidate list, a reference inter-view motion vector corresponding to a reference view motion vector of the searched temporal neighboring block; deriving an inter-view motion vector of the current texture block using one of reference inter-view motion vectors stored in the candidate list; and performing inter-view inter-prediction on the current texture block using the derived inter-view motion vector.

According to another aspect of the present invention, there is provided a device for processing a video signal, including: an inter-view motion vector determination unit configured to search spatial neighboring blocks of a current texture block for a block coded using a reference view motion vector, to store, in a candidate list, a reference inter-view motion vector corresponding to a reference view motion vector of the searched spatial neighboring block, to search temporal neighboring blocks of the current texture block for a block coded using a reference view motion vector, and to store, in the candidate list, a reference inter-view motion vector corresponding to a reference view motion vector of the searched temporal neighboring block, wherein the inter-view motion vector determination unit is configured to derive an inter-view motion vector of the current texture block using one of reference inter-view motion vectors stored in the candidate list and to perform inter-view inter-prediction on the current texture block using the derived inter-view motion vector.

[Modes for Invention]

Techniques of compressing or decoding multiview video signal data consider spatial redundancy, temporal redundancy and inter-view redundancy. In the case of a multiview image, multiview texture images captured at two or more views can be coded in order to generate a three-dimensional image. Furthermore, depth data corresponding to the multiview texture images may be coded as necessary. The depth data can be compressed in consideration of spatial redundancy, temporal redundancy or inter-view redundancy. Depth data is information on the distance between a camera and a corresponding pixel. The depth data can be flexibly interpreted as depth related information such as depth information, a depth image, a depth picture, a depth sequence and a depth bitstream in the specification. In addition, coding can include encoding and decoding in the specification and can be flexibly interpreted in the technical spirit and technical scope of the present invention.

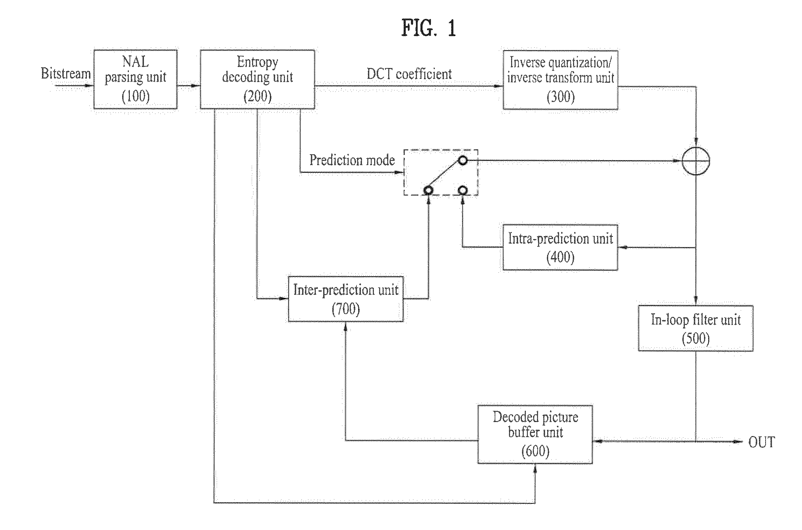

FIG. 1 is a block diagram of a video decoder according to an embodiment to which the present invention is applied.

Referring to FIG. 1, the video decoder may include a NAL parsing unit 100, an entropy decoding unit 200, an inverse quantization/inverse transform unit 300, an intra-prediction unit 400, an in-loop filter unit 500, a decoded picture buffer unit 600 and an inter-prediction unit 700. The NAL parsing unit 100 may receive a bitstream including multiview texture data. In addition, the NAL parsing unit 100 may further receive a bitstream including encoded depth data when the depth data is necessary for texture data coding. The input texture data and depth data may be transmitted as one bitstream or as separate bitstreams.

The NAL parsing unit 100 may perform parsing on an NAL basis in order to decode the input bitstream. When the input bitstream is multiview related data (e.g. 3-dimensional video), the input bitstream may further include a camera parameter. The camera parameter may include an intrinsic camera parameter and an extrinsic camera parameter, and the intrinsic camera parameter may include a focal length, an aspect ratio, a principal point and the like and the extrinsic camera parameter may include camera position information in the global coordinate system and the like.

The entropy decoding unit 200 may extract a quantized transform coefficient, coding information for texture picture prediction and the like through entropy decoding.

The inverse quantization/inverse transform unit 300 may acquire a transform coefficient by applying a quantization parameter to the quantized transform coefficient and decode the texture data or the depth data by inversely transforming the transform coefficient. Here, the decoded texture data or depth data may include residual data according to prediction.

The intra-prediction unit 400 may perform intra-prediction using reconstructed texture data in the current texture picture. The coding information used for inter-prediction may include an intra-prediction mode and partition information of intra-prediction.

The in-loop filter unit 500 may apply an in-loop filter to each coded block in order to reduce block distortion. The filter may smooth the edge of a block so as to improve the quality of a decoded picture. Filtered texture pictures may be output or stored in the decoded picture buffer unit 600 to be used as reference pictures.

The decoded picture buffer unit 600 may store or open previously coded texture pictures or depth pictures in order to perform inter-prediction. To store previously coded texture pictures or depth pictures in the decoded picture buffer unit 600 or to open the pictures, frame_num and a picture order count (POC) of each picture may be used.

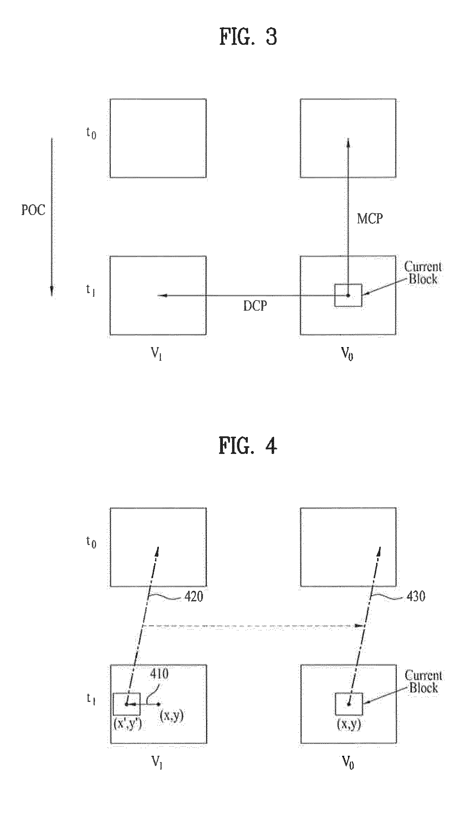

The inter-prediction unit 700 may perform motion compensation of a current block using reference pictures and motion information stored in the decoded picture buffer unit 600. The motion information may include a motion vector and reference index information in a broad sense in the specification. In addition, the inter-prediction unit 700 may perform temporal inter-prediction for motion compensation. Temporal inter-prediction may refer to inter-prediction using reference pictures, which correspond to the same view as the current texture block while corresponding to a time period different from that of the current texture block, and motion information of the current texture block. In the case of a multiview image captured by a plurality of cameras, inter-view inter-prediction may be performed in addition to temporal inter-prediction. Inter-view inter-prediction may refer to inter-prediction using reference pictures corresponding to views different from that of the current texture block and motion information of the current texture block. This will be described in detail with reference to FIG. 3.

For convenience, motion information used for inter-view prediction is referred to as an inter-view motion vector and inter-view reference index information. Accordingly, motion information can be flexibly interpreted as information including the inter-view motion vector and inter-view reference index information in the specification. A description will be given of a method for deriving motion information of the current texture block, particularly, a motion vector in the inter-prediction unit 700.

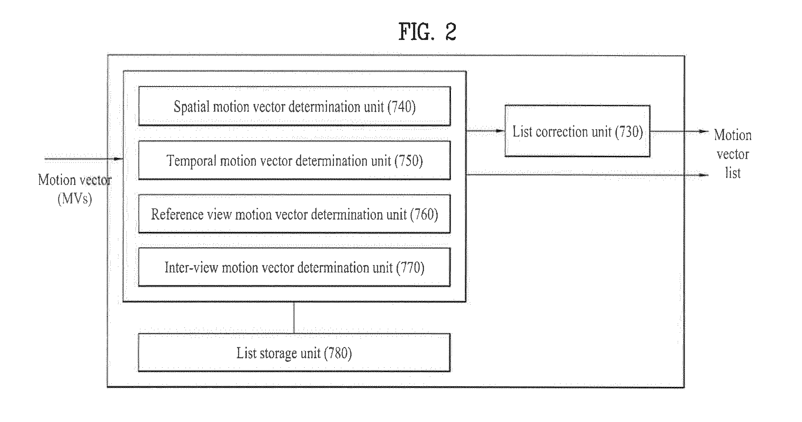

FIG. 2 illustrates a configuration of a motion vector list generator according to an embodiment to which the present invention is applied.

The motion vector list generator 710 may be included in the inter-prediction unit 700 of the decoder. The motion vector list generator 710 may include a list initialization unit 720, a list correction unit 730 and a list storage unit 780.

The list initialization unit 720 may generate a motion vector list including motion vector candidates. Here, the motion vector candidates may refer to a set of motion vectors of the current texture block or motion vectors which can be used as predicted motion vectors. A motion vector candidate according to the present invention may include at least one of a spatial motion vector, a temporal motion vector and a reference view motion vector and an inter-view motion vector. The spatial motion vector, the temporal motion vector, the reference view motion vector and the inter-view motion vector included in the motion vector candidate are respectively acquired by a spatial motion vector determination unit 740, a temporal motion vector determination unit 750, a reference view motion vector determination unit 760 and an inter-view motion vector determination unit 770, which are included in the motion vector list initialization unit 720.

The spatial motion vector determination unit 740 may derive a spatial motion vector from a motion vector of a neighboring block which is spatially adjacent to the current texture block. For example, the spatially adjacent neighboring block may correspond to one of a left block, an upper block, a left lower block, a left upper block and a right upper block of the current texture block. When it is determined that the current texture block and a neighboring block have the same reference picture, a motion vector of the neighboring block having the same reference picture may be added to the motion vector list.

The temporal motion vector determination unit 750 may derive a temporal motion vector from a motion vector of a neighboring block which is temporally adjacent to the current texture block. For example, the temporally adjacent neighboring block may correspond to a collocated block, which is in the same position as the current texture block within a reference picture corresponding to the same view as that of the current texture block and located in a time period different from that of the current texture block, or a block adjacent to the collocated block of the current texture block. Here, the picture including the temporal neighboring block may be specified by index information.

The reference view motion vector determination unit 760 may derive a reference view motion vector from a motion vector of a corresponding block positioned at a view different from the current texture block. Here, the corresponding block may be a block indicated by an inter-view motion vector of the current texture block. For example, a corresponding block within a view can be specified using the inter-view motion vector of the current texture block and the motion vector of the specified block can be set as the reference view motion vector of the current texture block.

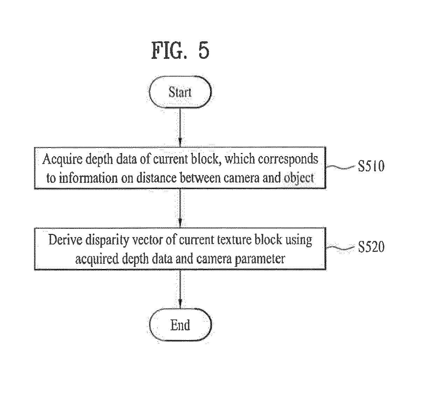

The inter-view motion vector determination unit 770 may derive an inter-view motion vector indicating a reference block of the current texture block from a) an inter-view motion vector of a spatial neighboring block or a temporal neighboring block of the current texture block, b) an inter-view motion vector for determining a reference view motion vector in the case of temporal inter-prediction of a neighboring block of the current texture block using the reference view motion vector, and c) a disparity vector derived from depth data corresponding to the current texture block, which are coded according to inter-view inter-prediction. A method of deriving an inter-view motion vector according to the present invention will be described with reference to FIGS. 5 to 10.

The motion vector list generated by the list initialization unit 720 may be used as a final motion vector list for deriving the motion vector of the current texture block and may be corrected through the list correction unit 730 to remove redundancy of motion vector candidates. For example, the list correction unit 730 can check whether spatial motion vectors in the motion vector list generated by the list initialization unit 720 are identical. When identical spatial motion vectors are present, the list correction unit 730 may remove one of the identical spatial motion vectors from the motion vector list. Furthermore, when the number of motion vector candidates, which are left in the motion vector list after removal of redundancy of motion vector candidates in the motion vector list, is less than 2, the list correction unit 730 may add a zero motion vector.

On the contrary, when the number of motion vector candidates, which are left in the motion vector list after removal of redundant motion vector candidates, is greater than 2, the list correction unit 730 may remove motion vector candidates except for 2 motion vector candidates from the motion vector list.

Here, the 2 motion vector candidates left in the motion vector list may be candidates having lower list identification indexes in the motion vector list. In this case, a list identification index, which is allocated to each motion vector candidate included in the motion vector list, may refer to information for identifying each motion vector candidate.

The list storage unit 780 may temporarily store the motion vector list generated by the list initialization unit 720. According to an embodiment of the present invention, the list storage unit 780 may store a candidate list of a reference inter-view motion vector determined by the inter-view motion vector determination unit 770. Here, the candidate list may include a reference inter-view motion vector corresponding to a reference view motion vector. The candidate list will be described in detail with reference to FIG. 4. The list storage unit 780 is an option rather than an essential element of the motion vector list generator 710 and may be included in the list initialization unit 720 or each motion vector determination unit such as the spatial motion vector determination unit 740.

A description will be given of a method for deriving the motion vector of the current texture block from the motion vector list in the inter-prediction unit 700.

Motion vector identification information about the current texture block may be extracted from a bitstream. The motion vector identification information may be information that specifies a motion vector candidate used as a motion vector or a predicted motion vector of the current texture block. That is, a motion vector candidate corresponding to the extracted motion vector identification information may be extracted from the motion vector list and set to the motion vector or predicted motion vector of the current texture block. When the motion vector candidate corresponding to the motion vector identification information is set to a predicted motion vector of the current texture block, a motion vector differential value may be used to reconstruct the motion vector of the current texture block. Here, the motion vector differential value may indicate a differential vector between the decoded motion vector and the predicted motion vector. Accordingly, the motion vector of the current texture block can be decoded using the predicted motion vector acquired from the motion vector list and the motion vector differential value extracted from the bitstream.

Pixel values of the current texture block may be predicted using the decoded motion vector and a reference picture list. The reference picture list may include not only reference pictures for temporal inter-prediction but also reference pictures for inter-view inter-prediction. The reference pictures for temporal inter-prediction and the reference pictures for inter-view inter-prediction will now be described with reference to FIG. 3.

Referring to FIG. 3, when a multiview video image is coded, previously restored images can be composed of an image $(V_0, t_0)$ of the same view as the currently coded image $(V_0, t_1)$ and an image $(V_1, t_1)$ corresponding to a different view. In this case, a case in which the view of a reference picture, which is referred to in order to predict the current texture block, is the same as the view $(V_0, t_1)$ of the current processed image is referred to as motion compensated prediction, whereas the view $(V_1, t_0)$ of the reference picture is different from the view of the currently processed image is referred to as disparity compensated prediction. DCP as well as MCP can be performed for multiview video.

Referring back to FIG. 2, the inter-view motion vector may be derived from one selected from a spatial inter-view motion vector, a temporal inter-view motion vector, a disparity vector and a reference inter-view motion vector.

A description will be given of an inter-view motion vector and a reference view motion vector used for inter-view prediction with reference to FIG. 4.

Referring to FIG. 4, in inter-prediction of multiview video, a corresponding block (x', y') included in an image $(V_1, t_1)$ of a view different from that of the current texture block (x, y) of the currently coded image $(V_0, t_1)$ may be used for inter-prediction. Here, a vector 410, which indicates the corresponding block (x', y') of the different view $V_1$ in the current texture block (x, y), can be defined as an inter-view motion vector. A motion vector 420 of the corresponding block (x', y') of the different view, indicated by the inter-view motion vector, can be set to a reference view motion vector 430 of the current texture block and used for inter-prediction.

A detailed description will be given of a method for deriving an inter-view motion vector used for inter-view inter-prediction. First of all, methods for deriving a spatial inter-view motion vector, a temporal inter-view motion vector, a disparity vector and a reference inter-view motion vector will now be described.

Firstly, the spatial inter-view motion vector according to the present invention may be derived from a motion vector of a neighboring block coded according to inter-view inter-prediction, from among spatial neighboring blocks of the current texture block. In other words, the spatial inter-view motion vector can be derived using a neighboring block having an inter-view motion vector, from among the spatial neighboring blocks of the current texture block.

Secondly, the temporal inter-view motion vector of the present invention may be derived from a motion vector of a neighboring block coded according to inter-view inter-prediction, from among temporal neighboring blocks of the current texture block. In other words, the temporal inter-view motion vector can be derived using a neighboring block having an inter-view motion vector, from among the temporal neighboring blocks of the current texture block. Here, the temporal neighboring blocks may refer to a collocated block of the current texture block and/or a block adjacent to the current texture block in a reference picture having the same view as the current picture including the current texture block.

Thirdly, the disparity vector of the present invention may indicate an inter-view disparity in a multiview image. In the case of multiview images, an inter-view disparity according to camera position may be generated and the disparity vector may compensate for the inter-view disparity. The method of deriving the disparity vector is described with reference to FIG. 3.

Fourthly, the reference inter-view motion vector of the present invention may be derived from an inter-view motion vector for determining a reference view motion vector. In other words, in the case of temporal inter-prediction of a spatial neighboring block or a temporal neighboring block of the current texture block using a reference view motion vector, an inter-view motion vector corresponding to the reference view motion vector can be regarded as the reference inter-view motion vector.

FIG. 5 is a flowchart illustrating a method for deriving a disparity vector of the current texture block using depth data according to an embodiment to which the present invention is applied.

Referring to FIG. 5, depth data of the current texture block, which represents information on the distance between a camera and an object, may be acquired (S510). Specifically, the depth data may be transmitted separately from a texture image, like a depth bitstream, a depth sequence, a depth picture and the like, or coded with a corresponding texture image and transmitted. Accordingly, the depth data of the current texture block can be acquired according to transmission scheme. When the current depth block includes a plurality of pixels, depth data corresponding to a corner pixel of the current texture block may be used. Otherwise, depth data corresponding to a center pixel of the current texture block may be used. Alternatively, one of a maximum value, minimum value and mode, from among a plurality of pieces of depth data corresponding to the plurality of pixels, may be selectively used and a mean of the plurality of pieces of depth data may be used. The disparity vector of the current texture block may be derived using the acquired depth data and a camera parameter (S520). A detailed method of deriving the disparity vector of the current texture block will now be described with reference to Equations 1 and 2.

[Equation 1]

$$Z = \frac{1}{\frac{D}{255} \times \left( \frac{1}{Z_{near}} - \frac{1}{Z_{far}} \right) + \frac{1}{Z_{far}}}$$

In Equation 1, Z denotes a distance between a corresponding pixel and a camera, D is a value obtained by quantizing Z and corresponds to depth data of the present invention, and $Z_{near}$ and $Z_{far}$ respectively represent a minimum value and a maximum value of Z defined for a view including the depth data. $Z_{near}$ and $Z_{far}$ may be extracted from a bitstream through a sequence parameter set, a slice header and the like and may be information predetermined in the decoder. Accordingly, when the distance between the corresponding pixel and the camera is quantized at a level of 256, Z can be reconstructed using depth data $Z_{near}$ and $Z_{far}$ as represented by Equation 1. Subsequently, the disparity vector for the current texture block may be derived using reconstructed Z, as represented by Equation 2.

[Equation 2]

$$d = \frac{f \times B}{Z}$$

In Equation 2, f denotes the focal length of a camera and B denotes a distance between cameras. It can be assumed that all cameras have the same f and B, and thus f and B may be information predefined in the decoder.

When only texture data of a multiview image is coded, information about camera parameters cannot be used and thus the method of deriving a disparity vector from depth data cannot be used. Accordingly, a disparity vector map storing disparity vectors may be used when only texture data of a multiview image is coded. The disparity vector map may be a map in which disparity vectors, each of which is composed of horizontal components and vertical components, are stored in a two-dimensional array. The disparity vector map of the present invention may be represented in various sizes. For example, the disparity vector map can have a size of 1x1 when only one disparity vector is used per picture. When a disparity vector is used per 4x4 block in a picture, the disparity vector map can have a size corresponding to 1/16 of the picture size since the disparity vector map has a width and a height of 1/4 of those of the picture. In addition, the size of the current texture block may be adaptively determined in one picture and a disparity vector may be stored per corresponding texture block.

An inter-view motion vector may be derived using a global disparity vector (GDV) derived from the syntax of a slice or a picture. The global disparity vector indicates a different view at which a reference picture is located at the current view in the unit of a slice or a picture including a plurality of blocks. Since the same global disparity vector is derived for a plurality of texture blocks, an offset vector for compensating for motion vectors in order to find a correct reference block may be additionally provided to texture blocks when the texture blocks have different inter-view motion vectors. An inter-view motion vector obtained from a vector sum of the global disparity vector and the offset vector may be included in inter-view motion vector candidates of the current texture block.

Inter-view motion vector candidates of the current text block may include a spatial inter-view motion vector, a temporal inter-view motion vector, a disparity vector and a reference inter-view motion vector, and an inter-view motion vector of the current texture block may be derived from one selected from the spatial inter-view motion vector, temporal inter-view motion vector and disparity vector, as described above. A description will be given of a method of deriving the inter-view motion vector of the current texture block from inter-view motion vector candidates.

The inter-view motion vector may be acquired in consideration of priorities of inter-view motion vector candidates of the current texture block. The priorities of the inter-view motion vector candidates may be set, as shown in Table 1.

[Table 1]

| Priority | Category |
|---|---|
| 0 | Spatial inter-view motion vector |
| 1 | Temporal inter-view motion vector |
| 2 | Reference inter-view motion vector |
| 3 | Disparity vector |

In Table 1, a lower priority value indicates a higher priority. That is, the spatial inter-view motion vector may have highest priority and the temporal inter-view motion vector, the reference inter-view motion vector and the disparity vector may have the following priorities.

Table 1 is exemplary and the present invention is not limited thereto. For example, the priorities can be set in the order of the temporal inter-view motion vector, spatial inter-view motion vector, disparity vector and reference inter-view motion vector or in the order of the disparity vector, reference inter-view motion vector, spatial inter-view motion vector and temporal inter-view motion vector. Priority may be set in consideration of the frequency of an inter-view motion vector used for a coded texture block. Otherwise, priority may be set in specific categories. For example, priorities of the spatial inter-view motion vector, temporal inter-view motion vector and reference inter-view motion vector can be set or priorities of the spatial inter-view motion vector and reference inter-view motion vector can be set.

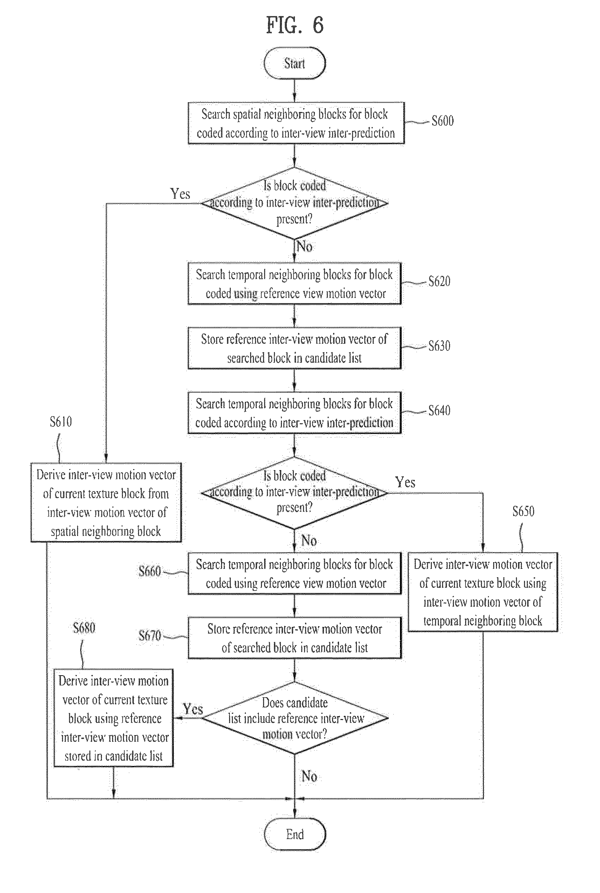

A description will be given of a method for deriving an inter-view motion vector when the priorities of the spatial inter-view motion vector, the temporal inter-view motion vector and the reference inter-view motion vector, shown in Table 1, are set with reference to FIG. 6.

In the case of the method shown in FIG. 6, the spatial inter-view motion vector and the temporal inter-view motion vector have higher priorities than the reference inter-view motion vector. That is, the reference inter-view motion vector is used only when the spatial inter-view motion vector and the temporal inter-view motion vector are not present. The reference inter-view motion vector may be stored in the candidate list while the spatial inter-view motion vector and the temporal inter-view motion vector are searched. When the search result shows that the spatial inter-view motion vector and the temporal inter-view motion vector are not present, the reference inter-view motion vector stored in the candidate list may be used to derive the inter-view motion vector of the current texture block.

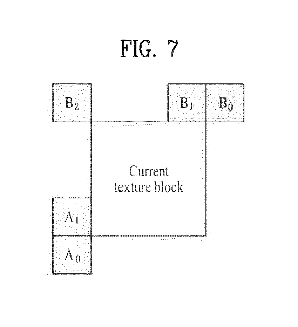

Referring to FIG. 6, spatial neighboring blocks may be searched for a block coded according to inter-view inter-prediction (S600). In this case, the block coded according to inter-view inter-prediction may refer to a DCP-coded block. Exemplary spatial neighboring blocks are shown in FIG. 7. Referring to FIG. 7, spatial neighboring blocks may include at least one of a left lower neighboring block $A_0$, a left neighboring block $A_1$, a right upper neighboring block $B_0$, an upper neighboring block $B_1$ and a left upper neighboring block $B_2$.

Priories of spatial neighboring blocks may be considered even during a process of searching for a block coded according to inter-view inter-prediction. It is assumed that the priorities of the spatial neighboring blocks are set as shown in Table 2 when the block coded according to inter-view inter-prediction is detected.

[Table 2]

| Priority | Spatial neighboring block |
|---|---|
| 0 | Left lower neighboring block |
| 1 | Left neighboring block |
| 2 | Right upper neighboring block |
| 3 | Upper neighboring block |
| 4 | Left upper neighboring block |

Referring to Table 2, a lower priority value refers to a higher priority.

Accordingly, the spatial neighboring blocks may be searched in the order of the left neighboring block $A_1$, upper neighboring block $B_1$, right upper neighboring block $B_0$, left lower neighboring block $A_0$ and left upper neighboring block $B_2$ for a block coded according to inter-view inter-prediction. For example, when the left neighboring block corresponds to a block coded according to inter-view inter-prediction, the inter-view motion vector of the left neighboring block can be set to the inter-view motion vector of the current texture block and searching can be ended. However, when the left neighboring block has not been coded according to inter-view inter-prediction, it can be checked whether the upper neighboring block has been coded according to inter-view inter-prediction. Alternatively, the spatial neighboring blocks may be searched in the order of the left lower neighboring block, left neighboring block, right upper neighboring block, upper neighboring block and left upper neighboring block for a block coded according to inter-view inter-prediction. However, priorities of the spatial neighboring blocks are not limited to the above-described embodiment.

A description will be given of a method for determining whether a neighboring block is coded according to inter-view inter-prediction. In one embodiment, a) a method of using an inter-view reference picture list, b) a method of using reference index information and c) a method of using identity of POC of a picture including a spatial neighboring block and POC of a reference picture of the spatial neighboring block may be used as the method of determining whether a block is coded according to inter-view inter-prediction. Specifically, it is possible to determine whether a neighboring block is coded according to inter-view inter-prediction a) on the basis of whether the corresponding neighboring block uses an inter-view reference picture list. The inter-view reference picture list may refer to a list composed of reference pictures positioned at views different from the view of the corresponding neighboring block. Alternatively, it may be determined whether a neighboring block is coded according to inter-view inter-prediction b) on the basis of reference index information of the corresponding neighboring block. For example, when the reference index information of the corresponding neighboring block specifies a reference picture located at a view different from that of the corresponding neighboring block, it can be specified that the corresponding neighboring block is coded according to inter-view inter-prediction. Alternatively, it may be determined whether a neighboring block is coded according to inter-view inter-prediction c) on the basis of whether POC of a picture including the corresponding neighboring block is identical to POC of a reference picture of the corresponding neighboring block. POC is output sequence information and pictures in the same access unit may have the same POC. Accordingly, when the two POCs are identical, this means that the picture including the corresponding neighboring block and the reference picture are located at different views. In this case, it can be specified that the corresponding neighboring block is coded according to inter-view inter-prediction.

When the spatial neighboring blocks include a block coded according to inter-view inter-prediction as a result of step S600, the inter-view motion vector of the current texture block may be derived from the inter-view motion vector of the corresponding spatial neighboring block (S610). On the contrary, when the spatial neighboring blocks do not include a block coded according to inter-view inter-prediction as a result of step S600, the spatial neighboring blocks may be searched for a block coded using a reference view motion vector (S620) and a reference inter-view motion vector of the searched block may be stored in the candidate list (S630). Here, the block coded using the reference view motion vector may refer to a block coded according to DV-MCP. The block coded according to DV-MCP may refer to a block coded according to MCP using a motion vector (i.e. reference view motion vector) predicted according to inter-view inter-prediction.

The candidate list is a list capable of storing reference inter-view motion vectors corresponding to reference view motion vectors of blocks and may be implemented to store only horizontal elements of the reference inter-view motion vectors or implemented in the form of a vector composed of horizontal and vertical elements. In addition, the candidate list may have list identification indices. The list identification indices are respectively allocated to the reference inter-view motion vectors included in the candidate list and refer to information for respectively identifying the reference inter-view motion vectors included in the candidate list.

A description will be given of a process of deriving a reference inter-view motion vector and a method for determining whether a block has a reference view motion vector.

When a neighboring block is coded according to temporal inter-prediction using a reference view motion vector, an inter-view motion vector (i.e. reference inter-view motion vector) used to determine the reference view motion vector can be used as an inter-view motion vector of the current texture block. The neighboring block may be a spatial neighboring block or a temporal neighboring block.

Whether the neighboring block has the reference view motion vector corresponds to whether the neighboring block has been coded according to temporal inter-prediction. Accordingly, whether the block is coded according to temporal inter-prediction can be determined on the basis of motion vector identification information of the neighboring block. It is possible to determine that the neighboring block has been coded according to temporal inter-prediction when the motion vector identification information indicates a motion vector using temporal inter-prediction.

The order of checking whether spatial neighboring blocks have been coded according to temporal inter-prediction may correspond to the order of checking whether spatial neighboring blocks have been coded according to inter-view inter-prediction. As described with reference to Table 2, spatial neighboring blocks may be searched for a block coded according to temporal inter-prediction in the order of left neighboring block $A_1$, upper neighboring block $B_1$, upper right neighboring block $B_0$, lower left neighboring block $A_0$ and upper left neighboring block $B_2$. However, searched spatial neighboring blocks and search order are not limited thereto.

In the above description, when a block coded according to inter-view inter-prediction is not present after step S600 of searching the spatial neighboring block for a block coded according to inter-view inter-prediction, the spatial neighboring blocks are searched for a block coded using a reference view motion vector (S620). However, a block coded according to inter-view inter-prediction and a block coded using a reference view motion vector may be simultaneously searched during search of the spatial neighboring blocks. In this case, when a spatial neighboring block being searched does not correspond to a block coded according to inter-view inter-prediction and is a block coded using a reference view motion vector, a reference inter-view motion vector corresponding to the reference view motion vector may be stored in the candidate list and a spatial neighboring block of the next priority may be searched.

Referring back to FIG. 6, the reference inter-view motion vector of the spatial neighboring block may be stored in the candidate list (S630) and temporal neighboring blocks may be searched for a block coded according to inter-view inter-prediction (S640). When the temporal neighboring blocks include a block coded according to inter-view inter-prediction as a result of step S640, the inter-view motion vector of the current texture block may be derived using the inter-view motion vector of the corresponding temporal neighboring block (S650). When the temporal neighboring blocks do not include a block coded according to inter-view inter-prediction as a result of step S640, the temporal neighboring block may be searched for a block coded using a reference view motion vector (S660) and the reference inter-view motion vector of the searched block may be stored in the candidate list (S670).

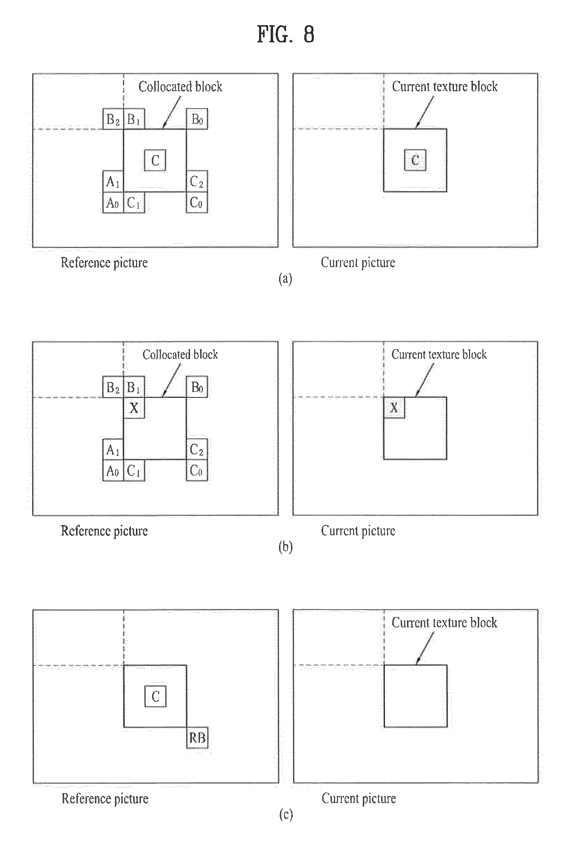

Exemplary temporal neighboring blocks are shown in FIG. 8.

Referring to FIG. 8, a temporal neighboring block may refer to a block (referred to as a collocated block hereinafter) in the same position as the current texture block within a reference picture of the current texture block. Here, the reference picture may refer to a picture corresponding to the same view as the current picture including the current texture block while corresponding to a different time. The collocated block according to the present invention may be defined through three methods, as shown in FIG. 8.

Referring to FIG. 8(a), the collocated block may be defined as a block including the position C in the reference picture, which corresponds to the position C of the center pixel of the current texture block. Referring to FIG. 8(b), the collocated block may be defined as a block including the position X in the reference picture, which corresponds to the position X of the left upper pixel of the current texture block. The temporal neighboring block of the present invention is not limited to the collocated block and may refer to a neighboring block adjacent to the collocated block. As shown in FIG. 8(a), at least one of the left lower neighboring block $A_0$, left block $A_1$, right upper neighboring block $B_0$, upper block $B_1$ and left upper neighboring block $B_2$ may be used as the neighboring block adjacent to the collocated block. Furthermore, since the reference picture has been decoded prior to the current picture, a lower neighboring block and a right neighboring block of the collocated block may also be used as temporal neighboring blocks. For example, a right lower neighboring block $C_0$, a lower neighboring block $C_1$ and a right neighboring block $C_2$ can be used as temporal neighboring blocks, as shown in FIG. 8(a). It is possible to search a) a collocated block and b) a neighboring block adjacent to the collocated block, which are regarded as temporal neighboring block candidates, for a block coded according to inter-view inter-prediction in consideration of priority. Specifically, it is determined whether a temporal neighboring block with highest priority is a block coded according to inter-view inter-prediction and, when the temporal neighboring block with the highest priority has not been coded according to inter-view inter-prediction, it is determined whether a temporal neighboring block with next highest priority is a block coded according to inter-view inter-prediction. This operation may be performed until a block coded according to inter-view inter-prediction is detected. For example, priorities of temporal neighboring blocks are assumed as shown in Table 3. The priorities shown in Table 2 are exemplary and the present invention is not limited thereto.

[Table 3]

| Priority | Temporal neighboring block |
|---|---|
| 0 | Collocated block |
| 1 | Neighboring block adjacent to the collocated block |

Temporal neighboring blocks according to an embodiment of the present invention may be determined according to prediction mode of a lower right block RB of a reference picture, as shown in FIG. 8(c). Specifically, whether the lower right block RB of the reference picture is a block coded according to inter-prediction may be checked. When the lower right block RB of the reference picture is not a block coded according to inter-prediction, a block in the reference picture, which corresponds to the current texture block, may be defined as a temporal neighboring block. For example, when the lower right block RB of the reference picture is not a block coded according to inter-prediction, a block at a position C in the reference picture, which corresponds to the center pixel position C of the current texture block, can be set as a temporal neighboring block.

The aforementioned search/storage steps performed for the spatial neighboring blocks can be equally applied to the temporal neighboring blocks and thus detailed description of search/storage steps for the temporal neighboring blocks is omitted.

Referring back to FIG. 6, when the candidate list includes reference inter-view motion vectors after step S670, the inter-view motion vector of the current texture block may be derived using one of the reference inter-view motion vectors stored in the candidate list (S680). When the candidate list includes no reference inter-view motion vector, the process may be ended without deriving the inter-view motion vector of the current texture block.

According to an example of the method of deriving the inter-view motion vector of the current texture block using the candidate list, reference inter-view motion vectors can be searched in data input order (i.e. data storage order) and an initially detected reference inter-view motion vector can be selected as the inter-view motion vector of the current texture block. For example, list identification indices are allocated in the order of inputting reference inter-view motion vectors to the candidate list, and a reference inter-view motion vector corresponding to list identification index 0 can be selected as the inter-view motion vector of the current texture block. That is, a vector corresponding to a minimum list identification index can be set to the inter-view motion vector of the current texture block.

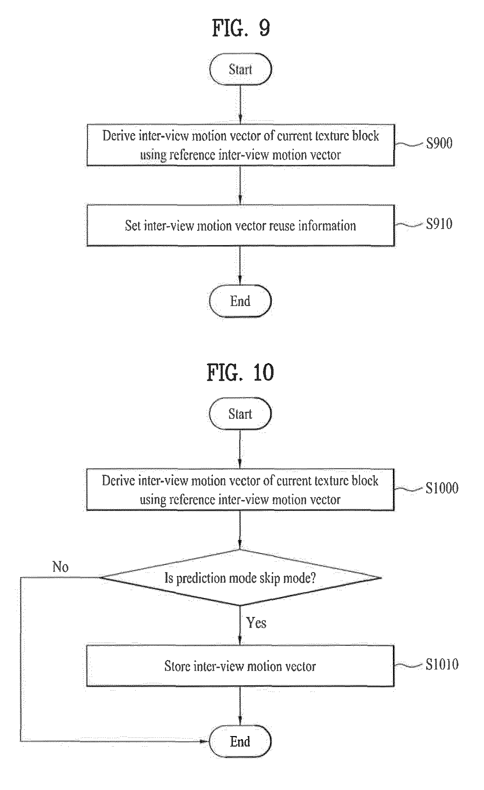

After step S680 of deriving the inter-view motion vector of the current texture block using the candidate list, reuse of an inter-view motion vector with low accuracy can be prevented by activating inter-view motion vector information indicating that the inter-view motion vector of the current texture block has been derived using the reference inter-view motion vector. This will be described in detail with reference to FIG. 9.

When inter-view inter-prediction is performed on the current texture block in skip mode using the derived inter-view motion vector, the derived inter-view motion vector may be stored to be reused to derive inter-view motion vectors of spatial or temporal neighboring blocks. This will be described in detail with reference to FIG. 10.

FIG. 9 is a flowchart illustrating a method of using inter-view motion vector information according to an embodiment to which the present invention is applied. FIG. 9 may correspond to an embodiment of step S680 of FIG. 6.

Referring to FIG. 9, the inter-view motion vector of the current texture block may be derived using a reference inter-view motion vector stored in the candidate list (S900). Then, inter-view motion vector reuse information, which indicates derivation of the inter-view motion vector of the current block using the reference inter-view motion vector, may be set (S910).

Specifically, a flag included in the inter-view motion vector reuse information may be set. The flag may indicate the inter-view motion vector derived using the reference inter-view motion vector. For example, the inter-view motion vector derived using the reference inter-view motion vector can be indicated by setting the flag to 1 from 0.

The inter-view motion vector reuse information may be used for the step (refer to S620 and S660 of FIG. 6) of searching neighboring blocks for a block coded using a reference view motion vector. That is, when the inter-view motion vector reuse information of a neighboring block being searched indicates an inter-view motion vector derived using a reference inter-view motion vector, the reference inter-view motion vector of the corresponding neighboring block may not be stored in the candidate list.

This is because the reference inter-view motion vector may have lower accuracy than that of an inter-view motion vector obtained according to inter-view inter-prediction coding. Accordingly, it is possible to improve inter-prediction coding efficiency by preventing spatial/temporal propagation of the reference inter-view motion vector using the inter-view motion vector information, as described above.

FIG. 10 is a flowchart illustrating a method of deriving an inter-view motion vector on the basis of a prediction mode according to an embodiment to which the resent invention is applied. FIG. 10 may correspond to an embodiment of step S680 of FIG. 6.

Referring to FIG. 6, the inter-view motion vector of the current texture block may be derived using a reference inter-view motion vector stored in the candidate list (S1000). Then, the prediction mode of the current texture block may be checked and the derived inter-view motion vector may be stored in a video decoder when the checked prediction mode is the skip mode (S1010).

The skip mode refers to a mode in which inter-prediction is performed using the motion vector list and list identification index. Specifically, upon selection of a block indicated by a derived inter-view motion vector in the skip mode, the motion vector of the selected block can be reused and data of the block indicated by the motion vector can be immediately used as data of the current texture block. That is, residual data may be 0 and thus may not be present.

A normal mode is an inter-prediction mode which is not the skip mode. When a block indicated by a derived inter-view motion vector is selected in the normal mode, the motion vector of the selected block is not reused. That is, residual data may be present.

The skip mode refers to a mode in which, upon selection of a block indicated by a derived inter-view motion vector in the skip mode, the motion vector of the selected block is reused and data of the block indicated by the motion vector is immediately used as data of the current texture block. That is, residual data may not be present since the residual data is 0.

According to an embodiment of the present invention, since an inter-view motion vector derived using a reference inter-view motion vector has the highest level of accuracy in the skip mode, the inter-view motion vector can be separately stored to be reused when inter-view motion vectors of other neighboring blocks are derived.

While a derived inter-view motion vector is stored for reuse only in the skip mode in the above-described embodiment, the inter-view motion vector can be stored for reuse in other modes (e.g. merge mode).

As described above, the decoding/encoding device to which the present invention is applied may be included in a multimedia broadcast transmission/reception apparatus such as a DMB (digital multimedia broadcast) system to be used to decode video signals, data signals and the like. In addition, the multimedia broadcast transmission/reception apparatus may include a mobile communication terminal.

The decoding/encoding method to which the present invention is applied may be implemented as a computer-executable program and stored in a computer-readable recording medium and multimedia data having a data structure according to the present invention may also be stored in a computer-readable recording medium. The computer-readable recording medium includes all kinds of storage devices storing data readable by a computer system. Examples of the computer-readable recording medium include a ROM, a RAM, a CD-ROM, a magnetic tape, a floppy disk, an optical data storage device, and a medium using a carrier wave (e.g. transmission through the Internet). In addition, a bitstream generated according to the encoding method may be stored in a computer-readable recording medium or transmitted using a wired/wireless communication network.

[Industrial Applicability]

The present invention can be used to code a video signal.

**Claims**

1.  A method for processing a video signal, comprising:

    searching spatial neighboring blocks of a current texture block for a block coded using a reference view motion vector;
    storing, in a candidate list, a reference inter-view motion vector corresponding to a reference view motion vector of the searched spatial neighboring block;
    searching temporal neighboring blocks of the current texture block for a block coded using a reference view motion vector;
    storing, in the candidate list, a reference inter-view motion vector corresponding to a reference view motion vector of the searched temporal neighboring block;
    deriving an inter-view motion vector of the current texture block using one of reference inter-view motion vectors stored in the candidate list; and
    performing inter-view inter-prediction on the current texture block using the derived inter-view motion vector.

**2.** The method according to claim 1, wherein the deriving of the inter-view motion vector of the current texture block using one of reference inter-view motion vectors stored in the candidate list is performed only when blocks coded according to inter-view inter-prediction are not present in the spatial neighboring blocks and the temporal neighboring blocks.

**3.** The method according to claim 1, wherein the deriving of the inter-view motion vector of the current texture block using one of reference inter-view motion vectors stored in the candidate list comprises deriving the inter-view motion vector of the current texture block using a reference inter-view motion vector initially stored in the candidate list.

**4.** The method according to claim 1, further comprising:

checking a prediction mode of the current texture block; and
storing the derived inter-view motion vector when the prediction mode is a skip mode,
wherein the stored inter-view motion vector is reused to derive an inter-view motion vector of another texture block.

**5.** The method according to claim 1, wherein the spatial neighboring blocks include at least one of a lower left neighboring block, a left neighboring block, an upper right neighboring block, an upper neighboring block and an upper left neighboring block of the current texture block.

**6.** The method according to claim 1, wherein the temporal neighboring blocks include at least one of a collocated block of the current texture block and a coding block including a neighboring block adjacent to the collocated block.

**7.** The method according to claim 1, wherein the reference inter-view motion vector is an inter-view motion vector corresponding to a reference view motion vector when at least one of the spatial neighboring blocks and the temporal neighboring blocks is derived using the reference view motion vector.

**8.** A device for processing a video signal, comprising:

an inter-view motion vector determination unit configured to search spatial neighboring blocks of a current texture block for a block coded using a reference view motion vector, to store, in a candidate list, a reference inter-view motion vector corresponding to a reference view motion vector of the searched spatial neighboring block, to search temporal neighboring blocks of the current texture block for a block coded using a reference view motion vector, and to store, in the candidate list, a reference inter-view motion vector corresponding to a reference view motion vector of the searched temporal neighboring block,
wherein the inter-view motion vector determination unit is configured to derive an inter-view motion vector of the current texture block using one of reference inter-view motion vectors stored in the candidate list and to perform inter-view inter-prediction on the current texture block using the derived inter-view motion vector.

**9.** The device according to claim 8, wherein the inter-view motion vector determination unit derives the inter-view motion vector of the current texture block only when blocks coded according to inter-view inter-prediction are not present in the spatial neighboring blocks and the temporal neighboring blocks.

**10.** The device according to claim 8, wherein the inter-view motion vector determination unit derives the inter-view motion vector of the current texture block using a reference inter-view motion vector initially stored in the candidate list.

**11.** The device according to claim 8, wherein the inter-view motion vector determination unit is configured to check a prediction mode of the current texture block and to store the derived inter-view motion vector when the prediction mode is a skip mode,
wherein the stored inter-view motion vector is reused to derive an inter-view motion vector of another texture block.

**12.** The device according to claim 8, wherein the spatial neighboring blocks include at least one of a lower left neighboring block, a left neighboring block, an upper right neighboring block, an upper neighboring block and an upper left neighboring block of the current texture block.

**13.** The device according to claim 8, wherein the temporal neighboring blocks include at least one of a collocated block of the current texture block and a coding block including a neighboring block adjacent to the collocated block.

**14.** The device according to claim 8, wherein the reference inter-view motion vector is an inter-view motion vector corresponding to a reference view motion vector when at least one of the spatial neighboring blocks and the temporal neighboring blocks is derived using the reference view motion vector.

**15.** A non-temporary computer-readable recording medium storing the method for processing a video signal of claim 1..

## FIG. 1

Bitstream → NAL parsing unit (100) → Entropy decoding unit (200) → DCT coefficient → Inverse quantization/ inverse transform unit (300)

Prediction mode

Intra-prediction unit (400)

Inter-prediction unit (700)

In-loop filter unit (500)

Decoded picture buffer unit (600)

OUT

EP 2 874 390 A1

**FIG. 2**

Motion vector (MVs) → [Spatial motion vector determination unit (740); Temporal motion vector determination unit (750); Reference view motion vector determination unit (760); Inter-view motion vector determination unit (770); List storage unit (780)] → List correction unit (730) → Motion vector list

FIG. 3

FIG. 4

FIG. 5

```
        ( Start )
            │
            ▼
┌───────────────────────────────────────────┐
│ Acquire depth data of current block, which │   ⌐S510
│ corresponds to information on distance     │
│ between camera and object                  │
└───────────────────────────────────────────┘
            │
            ▼
┌───────────────────────────────────────────┐
│ Derive disparity vector of current texture │   ⌐S520
│ block using acquired depth data and        │
│ camera parameter                           │
└───────────────────────────────────────────┘
            │
            ▼
        ( End )
```

## FIG. 6

Start

Search spatial neighboring blocks for block coded according to inter-view inter-prediction — S600

Is block coded according to inter-view inter-prediction present?

Yes → Derive inter-view motion vector of current texture block from inter-view motion vector of spatial neighboring block — S610

No ↓

Search temporal neighboring blocks for block coded using reference view motion vector — S620

Store reference inter-view motion vector of searched block in candidate list — S630

Search temporal neighboring blocks for block coded according to inter-view inter-prediction — S640

Is block coded according to inter-view inter-prediction present?

Yes → Derive inter-view motion vector of current texture block using inter-view motion vector of temporal neighboring block — S650

No ↓

Search temporal neighboring blocks for block coded using reference view motion vector — S660

Store reference inter-view motion vector of searched block in candidate list — S670

Does candidate list include reference inter-view motion vector?

Yes → Derive inter-view motion vector of current texture block using reference inter-view motion vector stored in candidate list — S680

No ↓

End

FIG. 7

## FIG. 8

Collocated block

$B_2$ $B_1$ $B_0$

C

$A_1$ $C_2$

$A_0$ $C_1$ $C_0$

Reference picture

Current texture block

C

Current picture

(a)

Collocated block

$B_2$ $B_1$ $B_0$

X

$A_1$ $C_2$

$A_0$ $C_1$ $C_0$

Reference picture

Current texture block

X

Current picture

(b)

C

RB

Reference picture

Current texture block

Current picture

(c)

## FIG. 9

Start

Derive inter-view motion vector of current texture block using reference inter-view motion vector — S900

Set inter-view motion vector reuse information — S910

End

## FIG. 10

Start

Derive inter-view motion vector of current texture block using reference inter-view motion vector — S1000

Is prediction mode skip mode?

No

Yes

Store inter-view motion vector — S1010

End

## INTERNATIONAL SEARCH REPORT

| International application No. |
| --- |
| **PCT/KR2013/006099** |

**A. CLASSIFICATION OF SUBJECT MATTER**

***H04N 7/32(2006.01)i***

According to International Patent Classification (IPC) or to both national classification and IPC

**B. FIELDS SEARCHED**

Minimum documentation searched (classification system followed by classification symbols)
H04N 7/32; H04N 7/26; H04N 7/01; H04N 7/36

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: inter prediction, motion vector, motion compensation, neighbor block, candidate list

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2012-0066593 A (OH, Soo Mi) 22 June 2012<br>See abstract, paragraphs 14-17, 23, 30-32, 39, 61 and 103-112, claims 1-3, figures 2-5. | 1-15 |
| Y | KR 10-2012-0068743 A (ELECTRONICS AND TELECOMMUNICATIONS RESEARCH INSTITUTE) 27 June 2012<br>See abstract, paragraphs 64-67, claim 1, figures 2-4. | 1-15 |
| A | US 2010-0208814 A1 (XIONG, Lianhuan et al.) 19 August 2010<br>See abstract, paragraphs 42-50, claims 1-7, figures 3-7. | 1-15 |
| A | US 2009-0180539 A1 (KUDANA, Arun Shankar et al.) 16 July 2009<br>See abstract, paragraphs 43-51, claim 1, figure 8. | 1-15 |
| A | JP 2008-147951 A (TOSHIBA CORP.) 26 June 2008<br>See abstract, paragraphs 11-15, claims 1-3, figure 4. | 1-15 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 OCTOBER 2013 (22.10.2013) | **23 OCTOBER 2013 (23.10.2013)** |

| Name and mailing address of the ISA/KR | Authorized officer |
| --- | --- |
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (July 2009)

EP 2 874 390 A1

INTERNATIONAL SEARCH REPORT
Information on patent family members

International application No.

**PCT/KR2013/006099**

| Patent document cited in search report | Publication date | Patent family member | Publication date |
|---|---|---|---|
| KR 10-2012-0066593 A | 22/06/2012 | KR 10-2013-0016172 A<br>US 2013-0016788 A1<br>WO 2012-081879 A1 | 14/02/2013<br>17/01/2013<br>21/06/2012 |
| KR 10-2012-0068743 A | 27/06/2012 | WO 2012-081949 A2<br>WO 2012-081949 A3 | 21/06/2012<br>07/09/2012 |
| US 2010-0208814 A1 | 19/08/2010 | CN 101415122 A<br>CN 101415122 B<br>EP 2202985 A1<br>EP 2202985 A4<br>JP 05081305 B2<br>JP 2011-501542 A<br>KR 10-1174758 B1<br>KR 10-2010-0083824 A<br>WO 2009-052742 A1 | 22/04/2009<br>16/11/2011<br>30/06/2010<br>23/11/2011<br>28/11/2012<br>06/01/2011<br>17/08/2012<br>22/07/2010<br>30/04/2009 |
| US 2009-0180539 A1 | 16/07/2009 | US 8213515 B2 | 03/07/2012 |
| JP 2008-147951 A | 26/06/2008 | CN 101197999 A<br>CN 101197999 B<br>JP 04869049 B2<br>US 2008-0137747 A1<br>US 8155198 B2 | 11/06/2008<br>04/08/2010<br>01/02/2012<br>12/06/2008<br>10/04/2012 |

Form PCT/ISA/210 (patent family annex) (July 2009)

23